# EUROPEAN PATENT APPLICATION

(11) **EP 4 379 021 A1**
(43) Date of publication of application: **05.06.2024**
(21) Application number: 22210700.5
(22) Date of filing: 30.11.2022
(51) Int. Cl.: C10G 1/10, B09B 3/40, C08J 11/04, C08L 75/12, C10B 53/07, B09B 101/75, C08G 18/00

(54) **PYROLYSIS OF SCRAP, FIBER REINFORCED POLYURETHANE-POLY(METH)ACRYLATE COMPOSITE MATERIAL FOR RECOVERY OF RECYCLATES**

(71) Applicant: Covestro Deutschland AG, 51373 Leverkusen (DE)
(72) Inventor: The designation of the inventor has not yet been filed
(74) Representative: Levpat

(57) **Abstract**

A recycling method for pyrolysis of scrap, fiber-reinforced polyurethane-poly(meth)acrylate composite material is suggested to recover organic amino compounds and reinforcement material. Said method comprises at least the following steps
(a) introduction of a feedstock, comprising at least one fiber reinforced polyurethane-poly(meth)acrylate composite scrap material as defined in claim 1 into a reactor, and;
(b) decomposition of the polyurethane-poly(meth)acrylate resin of the introduced fiber reinforced polyurethane-poly(meth)acrylate composite scrap material at a temperature in the range of 350°C to 700°C in the presence of one catalyst capable of influencing the thermal decomposition of said scrap material, yielding at least pyrolysate in the gas phase and a pyrolysis residue, comprising at least separated reinforcement material as a solid, wherein
(i) during said decomposition the amount of oxygen gas inside the reactor is at most 2,0 % by volume of the total volume of the gas phase inside the reactor, and
(ii) during said decomposition the pyrolysate is removed from the reactor, and
(iii) said pyrolysis residue is removed from the reactor, and;

(c) cooling the removed pyrolysate down to a temperature of below 350°C to yield pyrolysis product, selected from pyrolysate condensate, desublimated pyrolysate or mixtures thereof, and;
(d) preferably recovery of reinforcement material and catalyst from pyrolysis residue.

## Description

The invention is related to a pyrolysis method for thermal recycling of scrap, fiber reinforced polyurethane-poly(meth)acrylate composite material, and is further related to a composition, comprising said scrap, fiber reinforced polyurethane-poly(meth)acrylate composite material and at least one catalyst to be utilized in above method, and the use of said catalyst to recycle scrap, fiber reinforced polyurethane-poly(meth)acrylate composite material thermally.

From European Patent EP 3 129 422 B1 it is known, that fiber reinforced polyurethane-poly(meth)acrylate composite material may be used to manufacture products, such as wind generator blades, wind generator nacelle housings, watercraft propeller blades, hulls, interior and exterior automobile decorative parts, automobile bodies, radomes, machinery structural members, decorative parts and structural members for architectures and bridges. To meet the characteristics of aforesaid products, said composite material provides good mechanical strength and resistance to weathering.

Especially for said fiber reinforced polyurethane-poly(meth)acrylate composite material no recycling method has been reported for end-of-life material. At present, said scrap fiber reinforced polyurethane-poly(meth)acrylate composite material may be disposed at a landfill site or combusted. During combustion CO₂ will be emitted, contributing to global warming. The resulting plastic waste of landfills has a low density but a high volume and is able to contribute to the pollution of rivers and oceans.

For this reason it is necessary to develop a recycling method, in order to solve the disposal issue and to recover resources from scrap, leading to the saving of fossil resources.

The known procedures for the recycling of plastic waste can be divided roughly into three categories:
(1) mechanical recycling: The plastic waste is molten and can be recycled. This method is not applicable for fiber reinforced polyurethane-poly(meth)acrylate composite material.
(2) chemical and thermochemical recycling: According to this method, the plastic waste material will be depolymerized or decomposed to smaller molecules, to retrieve useful chemical raw materials.
(3) thermal recycling, wherein the plastic waste will be predominantly converted into exhaust gas and thermal energy.

The chemical raw materials recovered as product of thermochemical recycling may be used for the synthesis of new fiber reinforced material.

Thermochemical recycling is also known as pyrolysis. In most cases, pyrolysis is used to recycle packaging waste to regain a pyrolysis oil, which serves as a recycled naphtha and will be used as supplemental raw material to be added to cracker appliances of common crude oil refineries.

In order to retrieve polymer precursors of the recycled scrap fiber reinforced material different from aforementioned recycled naphtha, the general pyrolysis method must be modified.

Åkesson et al. (J. of Reinforced Plastics and Composites 31(17); 2012; 1136-1142) have reported to use microwave pyrolysis as a method of recycling of glass fiber from composite material of used blades of wind turbines. The material of said wind blades comprised glass fibers, which were embedded in a polyester resin.

According to the disclosure of the patent application WO 2015/162505 A1 a process for the pyrolysis of fiberglass-reinforced plastic waste was developed, in order to recover organic and inorganic components in such a state as to allow them to be advantageously reused as raw materials for making new objects. The pyrolysis of fiber reinforced polyurethane-poly(meth)acrylate composite material was not mentioned.

The patent application WO 2021/068083 A1 deals with the recycling of fiber reinforced polymer materials to recover intact fibers and powdered polymer resin that may be reused. The pyrolysis of fiber reinforced polyurethane-poly(meth)acrylate composite material was not mentioned.

Furthermore, it has been reported, that if during pyrolysis a catalyst or an additive is used, a reduction of operating temperature, a reduction of reaction time, an increase of degradation efficacy and a limitation of product distribution could be achieved, which will lead to a more efficient process.

M. Blazsó et al. (J. Chromatogr. A 1271 (2013) 217- 220) have shown, that upon use of a basic NH₄Y zeolite as catalyst the main product of a pyrolysis of a polyurethane material comprising polyol components was THF from the polyol component. Two further products could be easily identified as aniline and 4-methyl aniline, resulting from catalytic decomposition of diphenylmethane diisocyanate (MDI).

For the industrial scale pyrolysis of high amounts of fiber-reinforced polyurethane-poly(meth)acrylate composite material, new pyrolysis processes with higher selectivity are needed, in order to reduce the amount of byproducts and to increase the amount of reusable recyclates. The resin of the fiber reinforced polyurethane-poly(meth)acrylate composite material shall be converted into pyrolysis product, comprising a high yield of recyclates, useful for the synthesis of polyurethanes and poly(meth)acrylates, preferably aromatic amines as recyclates, for example aniline, toluidine, methylene dianiline (mMDA) or polymeric methylene dianiline (pMDA).

In addition to that, the fibers of the fiber-reinforced polyurethane-poly(meth)acrylate composite material shall be recovered in a state, that they can be reused, particularly for the production of fiber reinforced material or non-woven glass mats.

Therefore, it is an aspect of the invention to enable an industrial scale process for the pyrolysis of fiber-reinforced polyurethane-poly(meth)acrylate composite material, especially taken from scrap wind blades.

It is another aspect of the invention to provide a composition as a feedstock for the an industrial scale pyrolysis of -fiber-reinforced polyurethane-poly(meth)acrylate composite material, which improves selectivity of the pyrolysis process and leads to a recovery of high amounts of recyclates reusable for the production of polyurethane-material, preferably in an amount of more than 40 wt.-% related to the total weight of the initially introduced resin component of the fiber-reinforced polyurethane-poly(meth)acrylate composite material.

It is another aspect of the invention, to recover fibers from the fiber-reinforced polyurethane-poly(meth)acrylate composite material, which as recyclate have enough stability and mechanical strength to be reused as fibers of fiber-reinforced composite material.

At least one of the aforementioned aspects can be achieved by a method for pyrolysis of scrap, fiber-reinforced polyurethane-poly(meth)acrylate composite material, comprising at least the following steps
(a) introduction of a feedstock, comprising at least one fiber-reinforced polyurethane-poly(meth)acrylate composite scrap material,
   wherein said fiber-reinforced polyurethane-poly(meth)acrylate composite of said scrap material was obtained from at least one reinforcement material and at least one polyurethane-poly(meth)acrylate reactive composition, wherein the polyurethane-poly(meth)acrylate reactive composition was comprising:
   A) an isocyanate component comprising one or more organic polyisocyanates;
   B) an isocyanate-reactive component comprising:
      B1) one or more (meth)acrylate monomers containing at least one hydroxyl - functionality;
      B2) one or more organic polyols;
   C) a radical reaction initiator, and
   wherein the polyurethane-poly(meth)acrylate resin was obtained by reacting the components, preferably by a one-pot process,
   into a reactor, and;
(b) decomposition of the polyurethane-poly(meth)acrylate resin of the introduced fiber-reinforced polyurethane-poly(meth)acrylate composite scrap material at a temperature in the range of 350°C to 700°C in the presence of at least one catalyst capable of influencing the thermal decomposition of said scrap material, yielding at least pyrolysate in the gas phase and a pyrolysis residue, comprising at least separated reinforcement material as a solid, wherein
   (i) during said decomposition the amount of oxygen gas inside the reactor is at most 2,0 % by volume of the total volume of the gas phase inside the reactor, and
   (ii) during said decomposition the pyrolysate is removed from the reactor, and
   (iii) said pyrolysis residue is removed from the reactor, and;
(c) cooling the removed pyrolysate down to a temperature of below 350°C to yield pyrolysis product, selected from pyrolysate condensate, desublimated pyrolysate or mixtures thereof, and;
(d) preferably recovery of reinforcement material and catalyst from pyrolysis residue.

The "feedstock" means the totality of the substances introduced into the reactor for pyrolysis, which is thermally treated there in the absence of oxygen gas or in presence of a reduced quantity of oxygen gas. The feedstock is preferably solid before being introduced into the reactor.

The term "(meth)acrylate" means a group of compounds, consisting of acrylic acid and derivatives thereof, methacrylic acid and derivatives thereof.

The term "poly(meth)acrylate" means a group of polymeric or copolymeric compounds, prepared from at least one or more (meth)acrylate monomer.

The "pyrolysate" means all products formed by pyrolysis, which are in the gaseous phase of the reactor under the conditions of step (b).

The "pyrolysis residue" means the total amount of material formed by pyrolysis and further residues of the feedstock, which are not located under the conditions of step (b) in the gas phase of the reactor. Preferred embodiments of the method according to the invention are characterized in, that the pyrolysis residue is a solid.

The "pyrolysis product" means the total amount of products located in the pyrolysate, which accumulate) via condensation and/or resublimation by cooling the pyrolysate according to step (c). A liquid pyrolysis product is also known as a pyrolysis oil.

Unless explicitly defined otherwise in the context, a substance (e.g. material, feedstock, pyrolysate, pyrolysis product, pyrolysis residue) is "liquid" if it is in the liquid state at 20°C and 1013 mbar. Unless explicitly defined otherwise in the context, a substance (e.g. material, feedstock, pyrolysate, pyrolysis product, pyrolysis residue) is "solid" if it is in the solid state at 20°C and 1013 mbar. Unless explicitly defined otherwise in the context, a substance (e.g. material, feedstock, pyrolysate, pyrolysis product, pyrolysis residue) is "gaseous" if it is in a gaseous state at 20°C and 1013 mbar.

A substance is "organic" if its chemical structure contains at least one covalent carbon-hydrogen bond.

The average molecular weights Mw given in the context of this application for polymers or polymeric ingredients are - unless explicitly states otherwise - always weight-average molecular weights Mw, which can generally be determined by gel permeation chromatography with the aid of an RI detector, the measurement being carried out against an external standard.

A "reactor" is a volume in which a chemical conversion, e.g. a thermal decomposition of substances from the pyrolysis material, takes place. For thermal decomposition, this can be, for example, the volume of a heated vessel in which the pyrolysis material is located.

According to a preferred embodiment of the method, it is advantageous to introduce the pyrolysis material into a reactor, which is characterized in that it is selected from continuous stirred tank reactor (CSTR), fixed bed reactor, fluidized bed reactor, screw reactor, screw conveyor reactor, entrained flow reactor, rotary tube reactor, paddle reactor. In particular, reactors in which the pyrolysis material can be introduced continuously are preferably suitable and are preferably selected from rotary tube reactor, continuous stirred tank reactor (CSTR), fixed bed reactor (in particular with a continuous bed exchange (shaft reactor) with internal heat exchanger, preferably with internal heat exchanger tubes), screw reactor, crew conveyor reactor, entrained flow reactor, rotary tube reactor or fluidized bed reactor. A particularly preferred reactor of an embodiment of the process is selected from screw reactor, rotary kiln or fluidized bed. Further preferred reactors for the process according to the invention and their embodiments are described below (vide infra).

According to the invention, the feedstock introduced into the reactor comprises fiber-reinforced polyurethane-poly(meth)acrylate composite scrap material and in some cases the catalyst. In one embodiment of the process according to the invention, said pyrolysis material comprises said scrap material in a total amount of 10.0 to 80.0% by weight, more preferably 30.0 to 70.0% by weight, in each case based on the total weight of the pyrolysis material.

It has been found advantageous if said scrap composite material of the feedstock is preferably introduced into the reactor in the form of solid particles. The optimum particle size of said particles depends on the choice of the feeding system of the pyrolysis reactor. It was found to be beneficial to introduce said scrap material in form of particles, which have a particle size between 10 cm and 1 mm.

The fiber-reinforced polyurethane-poly(meth)acrylate composite scrap material can be part of end-of-life products selected from wind generator blades, wind generator nacelle housings, watercraft propeller blades, hulls, interior and exterior automobile decorative parts, automobile bodies, radomes, machinery structural members, decorative parts and structural members for architectures and bridges. Said end-of-life products are composed of several different components, whereas at least one of these components comprises fiber-reinforced polyurethane-poly(meth)acrylate composite scrap material which is comprised in the feedstock.

Preferably, said end of life product is selected from wind generator blades. The main features of a construction of a typical wind blade and the materials used for manufacturing wind blades can be taken from a review article of Mishnaevsky et al., Materials, 10(11), 2017, 1285 (DOI:10.3390/ma10111285): A wind turbine blade consists of two faces (on the suction side and the pressure side), joined together and stiffened either by one or several integral (shear) webs linking the upper and lower parts of the blade shell or by a box beam (box spar with shell fairings). The structure of the blade is made of several elements, namely shear webs, load carrying beam, leading and trailing edge and aerodynamic shell. The aerodynamic shell of the above mentioned two faces comprises fiber reinforced composite material. Said shells are adhesively bonded together. Vacuum assisted resin transfer molding (VARTM) is the most common manufacturing method for manufacturing of wind turbine rotor blades. According to VARTM layers of fabrics of dry fibers, with nearly all unidirectional fibers, aligned in the direction along the length of the blade, are position on mold parts along with polymer foams or balsa wood for sandwich structures (for the aeroshells). The fabrics and subsequently covered by a vacuum bag and made air-tight. After the application of vacuum, resin, e.g. polyurethane-poly(meth)acrylate resin, flows in and wets the fibers. After infusion, the resin cures at room temperature. In most cases, wind turbine rotor blades are made in large parts, e.g., as two aeroshells with a load-carrying box (spar) or internal webs that are then bonded together with an adhesive.

End-of life products are mostly comprised of different kinds of material. The recycling of end-of life products, e.g. of end-of life wind blades, can be facilitated, if the diversity of different materials used for manufacturing of the product is reduced. At least a related chemical composition of the materials used for manufacturing shall lead to an improved recyclability of the product. Wind blades are composed of a variety of materials, e.g. chosen from wood, foam, reinforcement material, resin, adhesive. To ease recycling it may be advantageous for example to provide aforementioned foam or a substitute of wood, which is formed by a compound having a chemical composition similar to the resin used for the fiber reinforced composite material.

The polyurethane-poly(meth)acrylate composite material comprised in the feedstock according to the invention comprises a polyurethane-poly(meth)acrylate resin prepared from a polyurethane-poly(meth)acrylate reactive composition and a reinforcement material, wherein the polyurethane-poly(meth)acrylate reactive composition comprises:
A) an isocyanate component comprising one or more organic polyisocyanates;
B) an isocyanate-reactive component comprising:
   B1) one or more (meth)acrylate monomers containing at least one hydroxyl - functionality (hereinafter: "hydroxyl (meth)acrylate monomer")
   B2) one or more organic polyols;
C) a radical reaction initiator, and
wherein the polyurethane-poly(meth)acrylate resin is prepared by mixing component B) with components A) and C), and reacting the components, for example preferably in a one-pot process.

For the purpose of this application, the term "polyisocyanate" is used for an organic compound containing two or more isocyanate groups (-N=C=O).

The term "functionality" or "f' when used in this application means the average functionality (number of Zerewitinoff-active hydrogen atoms per molecule) of a polyol or a polyol mixture on the assumption that it is identical to the average functionality (number of active hydrogen atoms per molecule) of the starter compound(s) used during preparation of the polyol.

The term f(NCO), with regard to an isocyanate, means the average number of reactive isocyanate groups in the respective compound.

The term f(olefine), with regard to a compound, means the average number of reactive olefinic-groups in the respective compound.

For the purpose of this application, the term "one-pot process" is used for a process, wherein the reaction of components A), B1) and B2) is started in presence of C) and the reaction conditions are chosen in such a manner, that urethane formation and radical olefine polymerization take place simultaneously or at least partly in parallel. Generally, upon mixing all components, the initiation of the polyurethane addition is followed by the radical polymerization reaction at elevated temperature (depending on the thermal lability of the initiator C). Both reactions reach their maximum conversion rate at the same time.

As polyisocyanate component A), the conventional aliphatic, cycloaliphatic and in particular aromatic di- and/or poly-isocyanates may be used. Examples of such polyisocyanates which are suitable are 1,4-butylene diisocyanate, 1,5-pentane diisocyanate, 1,6-hexamethylene diisocyanate (HDI), isophorone diisocyanate (IPDI), 2,2,4- and/or 2,4,4-trimethylhexamethylene diisocyanate, bis(4,4'-isocyanatocyclohexyl)methane or mixtures thereof with the other isomers, 1,4-cyclohexylene diisocyanate, 1,4-phenylene diisocyanate, 2,4- and/or 2,6-toluene diisocyanate (TDI), 1,5-naphthalene diisocyanate, 2,2'- and/or 2,4'- and/or 4,4'-diphenylmethane diisocyanate (monomeric MDI, mMDI), higher homologues (oligomeric MDI) thereof, mixtures of monomeric and oligomeric MDI (polymeric MDI, pMDI), 1,3- and/or 1,4-bis-(2-isocyanato-prop-2-yl)-benzene (TMXDI), 1,3-bis-(isocyanatomethyl)benzene (XDI). There is preferably used as the isocyanate diphenylmethane diisocyanate (MDI) and, in particular, mixtures of diphenylmethane diisocyanate and polyphenylenepolymethylene polyisocyanate (pMDI). The mixtures of diphenylmethane diisocyanate and polyphenylenepolymethylene polyisocyanate (pMDI) have a preferred monomer content of from 10 to 100 wt.%, preferably from 20 to 80 wt.%, particularly preferably from 30 to 60 wt.%. The NCO content of the polyisocyanate [measured according DIN EN ISO 14896:2009-07] that is used should preferably be greater than 23 wt.%, more preferably greater than 26 wt.%, particularly preferably greater than 30 wt.%. The functionality of the isocyanate should preferably be from 2.0 - 3.5, more preferably 2.1 - 2.9. The viscosity of the isocyanate should preferably be ≤750 mPa*s (at 25°C), more preferably ≤500 mPa^{∗}s (at 25°C) and particularly preferably ≤300 mPa^{∗}s (at 25°C) [measured according to DIN 53019-1:2008-09]. When used in the invention, the organic polyisocyanate may include dimers, trimers, tetramers or pentamers of the isocyanate and/or a combination thereof.

Modified, capped and prepolymerized isocyanates, which for example may be prepared by reaction of an excessive amount of an organic polyisocyanate or a mixture of organic polyisocyanates with a polyol compound, may also be used as the isocyanate component A). Compounds and methods for production have been described in the technical literature.

The isocyanate-reactive component B) further comprises hydroxyl (meth)acrylate monomers B1).

In a preferred embodiment, the hydroxyl number of the hydroxyl (meth)acrylate monomer is between 150 - 700 mg KOH / g and more preferably 220- 600 mg KOH/g and still more preferably 300- 500 mg KOH/g, the average hydroxyl functionality of B1) is 1-3, more preferably 1 - 2, still more preferably 1, and the average olefinic functionality of B1) is 1- 3, more preferably 1-2, still more preferably 1. Especially preferably B1) is selected from the group consisting of hydroxyethyl (meth)acrylate, hydroxypropyl (meth)acrylate, hydroxybutyl (meth)acrylate, and combinations thereof.

B1) may be prepared using a conventional methods in the art, e.g. by esterification reaction between (meth)acrylic anhydride, (meth)acrylic acid or (meth)acryloyl halide and HO-(R²O)ₙ-H.

The one or more organic polyols B2) are preferably selected from the group consisting of polyether polyols, polyester polyols, polyetherester polyols, polymer polyols, polycarbonate polyols, polyethercarbonate polyols and combinations thereof. Polyether polyols and / or polyester polyols are particularly preferably used in the polyol formulation. The use of polyether polyols as only polyols is especially preferred.

The polyols are described, for example, by Ionescu in "Chemistry and Technology of Polyols for Polyurethanes", Rapra Technology Limited, Shawbury 2005, p.3 1 ff. (Cap. 3: The General Characteristics of Oligo-Polyols, p.55 ff. (Cap. 4: Oligo-polyols for Elastic Polyurethanes). P. 263ff. (Cap. 8: Polyester Polyols for Elastic Polyurethanes) and, in particular, to page 32 ff. (Cap. 13: Polyether Polyols for Rigid Polyurethane Foams) and S.4 1 9 ff. (Cape. 16: Polyester Polyols for Rigid Polyurethane Foams).

In a preferred embodiment, the hydroxyl number of the polyols is between 150 - 700 mg KOH / g and more preferably 220- 600 mg KOH/g and the average functionality of the polyols in B2) is 1,5 - 4,5, more preferably 1,9 - 3,2, still preferably 2,2 - 2,8.

Values for the hydroxyl number (herein "OH-value") given in this application are measured according DIN EN ISO 53240, part 2 (11/2007).

Preference is given to the use of one or more polyhydroxypolyethers ("polyether polyols") as component B2), which may be prepared by polyaddition of alkylene oxides such as propylene oxide and / or ethylene oxide onto polyfunctional starter compounds in the presence of catalysts, in a manner known by the person skilled in the art. The polyhydroxypolyethers are preferably prepared from a starter compound and one or more alkylene oxides, for example, ethylene oxide, butylene oxide and / or propylene oxide. Preferred starter compounds are molecules having 2 to 8 hydroxyl groups per molecule such as water, ethylene glycol, propylene glycol, diethylene glycol, dipropylene glycol, triethylene glycol, tripropylene glycol, 1,4-butanediol, 1,6-lexanediol, bisphenol A, glycerol, trimethylolpropane, pentaerythritol, sorbitol and sucrose. Particular preference is given to 1,2- and 1,3-propylene glycol, diethylene glycol, sorbitol, glycerol, trimethylolpropane, sucrose and mixtures of the abovementioned products as starter materials.

Polyether polyols based on propylene oxide are particularly preferred, specifically propylene oxide polyethers with a functionality of 2 - 3. For those polyethers, 1,2-propylene glycol, glycerol and/or trimethylpropane are particularly preferred as starter compound.

Polyester polyols are ester-containing polyhydroxy compounds, e.g. castor oil or polyhydroxy polyesters, such as are obtainable by polycondensation of excess amounts of simple polyhydric alcohols of the type above described, with preferably dibasic carboxylic acids or their anhydrides. The dibasic carboxylic acid is preferably but not limited to an aliphatic carboxylic acid having 2-12 carbons, preferably but not limited to succinic acid, malonic acid, glutaric acid, adipic acid, suberic acid, azelaic acid, sebacic acid, dodecyl carboxylic acid, maleic acid, fumaric acid, phthalic acid, isophthalic acid, terephthalic acid, or a combination thereof. Anhydride of the respective acids may also or alternatively used as educts. Monobasic acids, e.g. benzoic acid or alcanoic acids and/or acids prepared from hydroxyl carboxylic acids, e.g. hydroxy caproic acid, hydroxy butyric acid, hydroxy stearic acid, hydroxyl decanoic acid, and the like, may be used in addition. The polyester polyol also includes polyester polyols prepared from or with lactones, e.g. ε-caprolactone, butyrolactone and the like.

Examples for polyhydric alcohols to react with the acids are ethylene glycol, diethylene glycol, 1,2-propanediol, 1,3-propanediol, dipropylene glycol, 1,3-methylpropanediol, 1,4-butanediol, 1,5-pentanediol, 1,6-hexanediol, neopentyl glycol, 1,10-decanediol, glycerine, trimethylolpropane, or a combination thereof. Monools may be used in addition.

Biobased compounds and / or derivatives thereof may also be used for the production of polyester polyols, e.g. vegetable oils, vegetable oil polyols or modified products thereof. Vegetable oil is a compound prepared from an unsaturated fatty acid and glycerine, or an oil extracted from e.g. plant fruits or seeds. Examples include but are not limited to castor oil, polyhydroxy-fatty acids, rinoleic acid, grape seed oil, pumpkin seed oil, palm oil, olive oil, avocado oil, coconut oil, palm kernel oil, coco butter, cotton seed oil, pumpkin seed oil, maize oil, sunflower seed oil, wheat germ oil, sesame oil, hemp oil, thistel oil, linseed oil, soybean oil, peanut oil, lupin oil, borrage oil, mustard oil, jatropha oil, walnut oil, jojoba oil, lecithin, e.g. based on soya, primrose oil, wild rose oil, peanut oil, walnut oil, hazelnut oil, canola oil and castor oil etc, Fatty acids, hydroxyl modified fatty acids, polyhydroxy- fatty acids and epoxized fatty acids and fatty acid esters, e.g. based on myristoleic acid, palmitoleic acid, oleic acid, vaccenic acid, petroselic acid, gadoleic acid, erucic acid, nervonic acid, linoleic acid, alpha- and gamma- linoleic acid, stearidonic acid, arachidonic acid, timnodonic acid, clupanodonic acid and cervic acid. Also advantageous is the use of mixtures of such biobased acids with other carboxylic acids, e.g. phthalic acids. Hydroxyl groups may further be introduced into the starter of a vegetable oil polyol by a process such as cracking, oxidation or transesterification, and then the vegetable oil polyols may be prepared using a process known to one skilled in the art for preparing an organic polyol. Esters prepared from ricinoic acid with polyfunctional alcohols are especially preferred when using biobased polyols.

The polyester polyol used in compound B2), alone or in mixture with e.g. polyether polyols, has preferably a molecular weight of 200-3000 g/mol and a functionality of 2-6, preferably 2-4, more preferably 2-3.

Other polyols may be used for component B2), preferably in a mixture with the above described polyether polyols and/or polyester polyols:
Polycarbonate polyols are polycarbonates containing hydroxyl groups, for example polycarbonate diols. They are obtained in the reaction of carbonic acid derivatives, such as diphenyl carbonate, dimethyl carbonate or phosgene, with polyols, preferably diols. Examples of such diols are ethylene glycol, 1,2- and 1,3-propanediol, 1,3- and 1,4-butanediol, 1,6-hexanediol, 1,8-octanediol, neopentyl glycol, 1,4-bishydroxymethylcyclohexane, 2-methyl-1,3-dipropylene glycol, 2,2,4-trimethylpentandiol, polypropylene glycols, dibutylene glycol, polybutylene glycols, bisphenols and lactone-modified diols. Examples for polycarbonate diols and their production may e.g. be found in EP 1359177 A.

Polyethercarbonate polyols may be prepared by addition of carbon dioxide and an alkylene oxide compound to a starter comprising active hydrogen, may also be used in the invention. Examples for polyethercarbonate polyols and their production may e.g. be found in EP 2910585 A, [0024] - [0041].

Polymer polyols are a polymer modified polyether polyols, preferably a grafted polyether polyol, or a polyether polyol dispersion. Examples for polymer polyols and their manufacturing may e.g. be found in pages 89 p., "Kunststoff-Handbuch", Vol. VII "Polyurethanes", 3. Edition, Carl Hanser Verlag, Munich / Vienna, 1993, pages 88-90 and EP 1 873 170 A1.

Polyetherester polyols are polyhydroxy polymers containing ether groups and polyester groups. They may, for example, be produced from the reaction dicarboxylic acids or their derivatives and polyetherpolyols, as described herein, or via epoxidation of starter compounds containing ester groups. Examples of polyetheresters and their synthesis have been described in WO 2010/043624 A and EP 1 923 417 A. Polyetherester polyols may also and advantageously be produced from biobased sources, e.g. from natural oil based acids, esters and polyols, as described herein.

Exemplary representatives of component B2) are furthermore also described in "Kunststoff-Handbuch", Vol. VII "Polyurethanes", 3. Edition, Carl Hanser Verlag, Munich / Vienna, 1993, pages 57-67.

The isocyanate-reactive component B) furthermore may contain at least one compound B3) which is selected from the group consisting of components being able to act as a radical polymerization accelerator.

The group of reaction accelerators known to the person skilled in the art comprises e.g. transition metal-based salts (e.g. based on platinum, tin, copper, cobalt or iron), amine-based compounds, ammonium salts and aniline compounds. Most of the compounds disclosed in the literature promote or catalyze both, the urethane polyaddition and radical polymerization. Often, the reaction accelerators for the radical polymerization reaction contain mixtures of the before mentioned compounds.

It has been found that it is advantageous when the reaction accelerator B3) used in the polyurethane-poly(meth)acrylate reactive composition does not contain catalytically active amines, ammonium salts or potassium salts. Preferably, the reaction accelerator B3) used in the polyurethane-poly(meth)acrylate reactive composition neither contains amines, ammonium salts nor potassium salts.

Preferably, the reaction accelerator B3) comprises cobalt(II) - salts. The use of cobalt(II) carboxylate is especially preferred.

In a preferred embodiment, the radical reaction accelerator B3) consists of cobalt(II)salts, especially cobalt(II) acetate and/or cobalt(II) ethylhexanoate.

The polyurethane-poly(meth)acrylate reactive composition further comprises C) a radical reaction initiator, which may be added into the isocyanate-reactive component B) or into the isocyanate component A) or into both. The addition into the isocyanate component A) to form a premixed component ("premix") of isocyanate A) and radical reaction initiator C), before mixing with component B), is preferred to avoid early start of the polymerization reaction in the isocyanate reactive component B). The initiator may be selected from peroxides, peroxyesters, ketone peroxides, diacyl peroxides, peroxyketals, peroxycarbonates, persulfides, peroxyboric acid, azo compounds and/or other suitable radical initiators that can initiate curing of a double bond-containing compound. The examples include tert-butylperoxy isopropyl carbonate, tert-butylperoxy 3,5,5-trimethylhexanoate, methyl ethyl ketone peroxide, cumyl hydroperoxide, and tert-butyl peroxybenzoate. Peroxyesters with the following structure I are preferred: 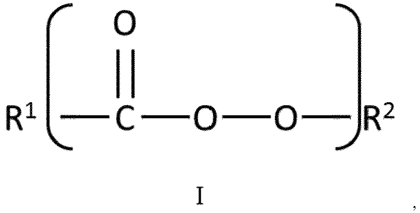 wherein R¹ and R² represent alkyl and / or aryl groups

tert-Butyl peroxybenzoate, tert-amyl peroxybenzoate and/or tert-amyl peroxyacetate are especially preferred. tert-Butyl peroxybenzoate is most preferred.

If a radical initiator with a peroxyester-functionality having the structure (I) is added, its content, referred to the amount of the carbonylperoxy-moiety [-(C=O)OO]- is preferably 0,1 - 3 wt.-%, based on 100 wt.% by weight of the isocyanate reactive component, with 0,1 - 2 wt.-% being especially preferred.

The addition of 1 - 3 wt. % of t-butyl peroxybenzoate is especially advantageous.

Radical reaction suppressants suitable for the invention include polymerization inhibitors, polymerization retarders and the like. Radical reaction suppressants include but is not limited to some phenol, quinine or not catalytically active amine compounds (e.g. sterically hindered amines), examples of which include, p-methoxyphenol, benzoquinone, polymethyl piperidine derivatives, etc.

Radical reaction promotors suitable for the invention which can increase reactivity of initiator and accelerator combinations include but are not limited to organic ligands such as acetylacetone and not catalytically active amines, e.g. sterically hindered amines, N,N-dimethylacetoacetamide, N,N-diethylacetoacetamide, etc.

However, when using the inventive accelerator B3) the addition of reaction promotors may be avoided, which is an advantage of the polyurethane-poly(meth)acrylate reactive composition according to the invention. Thus, in a preferred embodiment, the polyurethane-poly(meth)acrylate reactive composition does not contain any radical reaction promotors.
B) may optionally also contain further isocyanate-reactive compounds (= active hydrogen atoms), such as, for example, compounds with SH groups and acidic CH groups. Amine-based groups may be present only if they are not catalytically active, neither in the urethane reaction nor in the radical polymerization reaction, e.g. due to sterical hindrance. However, even if isocyanate-reactive compounds with such further active hydrogen atoms are present, more than 90%, in particular more than 95%, especially more than 99% and very particularly 100% of all isocyanate-reactive hydrogen atoms in B) result from OH groups. Preferably, there are no amine-groups containing isocyanate reactive components in B2.

In addition to components B1 and B2, B) may optionally also contain compounds comprising one or more olefinic functionalities such as but not limited to allyl / aryl (meth)acrylate, ether (meth)acrylate, and crosslinking acrylate and (meth)acrylate monomers containing isocyanate-reactive groups different from hydroxyl groups.

In addition, the polyurethane-poly(meth)acrylate reactive composition may also contain non-isocyanate reactive compounds such as, for example, compounds containing one or more olefinic functionalities, such as, but not limited to, styrene, vinyl ester, acrylate and methacrylic monomers such as but not limited to allyl / aryl (meth)acrylate, ether (meth)acrylate, and crosslinking acrylate and (meth)acrylate monomers with f(olefine) > 1.

The polyurethane-poly(meth)acrylate reactive composition may also comprise further aids or additives, as long as they do not include catalytically active amines. The further aids or additives include but not limited to fillers, inner release agents, flame retardants, smoke suppressants, dyes, pigments, antistatic agents, antioxidants, UV stabilizers, diluents, antifoam agents, coupling agents, surface wetting agents, leveling agents, moisture scavengers, molecular sieves, thixotropic agents, plasticizers, blowing agents, foam stabilizers, foam homogenizers, radical reaction suppressants, or combinations thereof, which may be optionally included in the isocyanate component A) and/or the isocyanate-reactive component B) or added separately to the polyurethane-poly(meth)acrylate reactive composition upon mixing.

A filler may be selected from the group consisting of aluminum hydroxide, bentonite, fly ash, wollastonite, perlite powder, fly ash floating beads, calcium carbonate, talc powder, mica powder, porcelain clay, fumed silica, expandable microspheres, diatomite, pozzuolana, barium sulfate, calcium sulfate, glass microspheres, rock powder, wood flour, wood chips, bamboo flour, bamboo chips, rice grains, chopped crop straw, chopped broomcorn straw, graphite powder, metal powder, recycled powder of thermosetting composite materials, plastic particles or powder, or combinations thereof. The glass microspheres may be solid or hollow.

Inner release agents suitable for the invention include any conventional release agents for manufacturing polyurethane, and examples include long-chain carboxylic acids, particularly fatty acids, such as stearic acid; amines of long-chain carboxylic acids, such as stearamide; fatty acid esters; metal salts of long-chain carboxylic acids, such as zinc stearate; or polysiloxanes. Examples of flame retardants suitable for the invention include triaryl phosphates, trialkyl phosphates, triaryl or trialkyl phosphates containing halogen, melamine, melamine resin, halogenated paraffin, red phosphorus or combinations thereof.

Other aids suitable for the invention include moisture scavengers, such as molecular sieves, silanes or oxazolidines; antifoaming agents, degassing agents, air release agents such as polydimethylsiloxane; coupling agents, such as monoethylene oxide. A coupling agent is particularly preferred for enhancing the binding strength between a resin matrix and a fibrous reinforcement material. Wetting agents are particularly preferred for improving fiber wetting during infiltration of a fibrous reinforcement material. Fine filler, for example, clay or fumed silica, is usually used as a thixotropic agent.

For the production of the fiber reinforced polyurethane-poly(meth)acrylate composite material, the polyurethane-poly(meth)acrylate reactive composition is mixed with the reinforcement material. Suitable reinforcement material comprised in the fiber reinforced polyurethane-poly(meth)acrylate composite scrap material include glass fibers, carbon nanotubes, carbon fibers, polyester fibers, natural fibers, aramid fibers, nylon fibers, basalt fibers, boron fibers, silicon carbide fibers, asbestos fibers, whiskers, hard particles, metal fibers and combinations thereof. Glass fibers are a particularly preferred reinforcement material.

The use of a core material in combination with a polyurethane-poly(meth)acrylate resin matrix and a reinforcement material facilitates the molding of the composite material and the weight reduction of the composite material. A core material commonly used in the art may be used for the polyurethane-poly(meth)acrylate composite material of the invention, examples of which include but are not limited to polystyrene foam such as COMPAXX^{®} foam; polyester PET foam; polyimide PMI foam; polyvinyl chloride foam; metal foams, such as those available from Mitsubishi Co.; balsa wood; and the like.

In an embodiment of the invention, the fiber reinforced polyurethane-poly(meth)acrylate composite material preferably has an amount of 1-90 wt.-%, more preferably 30-85 wt.-%, most preferably 50-80 wt.-%, based on 100 wt.-% by weight of the polyurethane-poly(meth)acrylate composite material.

A preferred process to produce the polyurethane-poly(meth)acrylate composite comprising a matrix of a polyurethane-poly(meth)acrylate resin combined with the reinforcement material, is the vacuum infusion process, also called Vacuum Assisted Resin Transfer Moulding (VARTM), known to one skilled in the art.

The VARTM process allows the impregnation of reinforcement material with a polyurethane-poly(meth)acrylate resin, wherein the driving force for the flow of resin is a pressure difference. The VARTM process, generally involves mixing the partially or un-degassed components of the resin by hand or by using a dosing unit fitted with a mixing chamber, transferring the mixed material to the mould via a resin reservoir placed under atmospheric pressure and atmosphere, before the resin flows into the mould containing the reinforcement material, driven by the pressure difference. A preferred process involves a direct VARTM method, wherein most of dissolved gasses and moisture of the components of a polyurethane-poly(meth)acrylate resin are removed under reduced pressure, before they are mixed in a mixing chamber of a dosing unit, which transfers the mixed material directly into the mould containing the reinforcement material, driven by the pressure difference, and without being exposed to the atmosphere.

The polyurethane-poly(meth)acrylate reactive composition shows a high conversion rate when reacted in a one-pot process. The polyurethane-poly(meth)acrylate reactive composition is suitable for the vacuum infusion process to prepare a polyurethane-poly(meth)acrylate composite material. It overcomes the deficiencies of the prior art with regard to low degree of conversion, moreover, with sufficient or even prolonged pot-life which allows for satisfying processing, e.g infusion of large reinforcement material structures. The polyurethane-poly(meth)acrylate composite prepared by the vacuum infusion process has unique properties such as such as fast curing, low exotherm and excellent mechanical properties, e.g. a high thermal deformation temperature, high tensile and flexural strength, high resistance to fatigue, high ductility, no content of styrene, and low shrinkage rate.

After production of a product comprising fiber reinforced polyurethane-poly(meth)acrylate composite material (for example a wind blade) the product will reach after its usage the end of its life-cycle. Said end-of-life product will be recycled. A feedstock for the method according to this invention will be provided and introduced according to step (a) for recycling.

A more effective and selective decomposition of the resin comprised in the fiber-reinforced scrap composite material is obtained, since the fiber reinforced scrap composite material introduced in step (a) is decomposed in the reactor by pyrolysis in the presence of at least one catalyst. Said catalyst is influencing the reaction of the decomposition of said scrap material. An appropriate catalyst can lower the pyrolysis temperature, reduce the product range to desired products and, if necessary, minimize coking. Low-cost catalysts are preferred for an efficient process. These can be, for example, naturally occurring materials such as inorganic salts, refractory oxides, minerals and industrial stones into which ions can optionally be introduced by a simple ion exchange process, as they do not require extensive synthesis. They are readily available and are therefore relatively cheap. Synthetic catalysts such as zeolites (for example, of the type ZSM-5, A, X,Y, etc), on the other hand, are an example of catalysts that are effective but not cheap, since they must be specially manufactured.

The feedstock preferably comprises at least one catalyst selected from the group consisting of alkaline inorganic materials, more preferably from the group of naturally occurring materials defined above. These inorganic materials may be refractory oxides. Refractory oxides are metal oxides stable at high temperatures from 350°C to 700°C. Such oxides acting as catalysts include the oxides of aluminum, magnesium, zirconium, titanium, chromium, zinc, tin and other metals or combinations of aluminum oxide with magnesium oxide and or calcium oxide.

Crystalline inorganic materials include aluminosilicates, silico-aluminophosphates, silicalite, spinels and other natural zeolites and clays. Thus, at least one compound selected from the group consisting of inorganic salts, minerals, metal oxides, mixed oxides, clays, zeolites is particularly suitable as said catalyst.

As a particularly preferred suitable catalyst, the feedstock comprises at least one basic catalyst or at least one catalyst with Lewis basic sites. If said catalyst is a solid basic catalyst, the number and strength of the basic sites of the catalyst can be determined by Fourier transform infrared spectroscopy and Temperature Programmed Desorption of CO₂ (TPD-CO2), or by common titrimetric methods.

A more particularly preferred catalyst comprises at least one oxide of aluminum chosen from oxide or mixed oxide, having spinel structure, hydrotalcite structure or γ-Al₂O₃ structure.

A highly preferred catalyst is selected from a mixed oxide of Al₂O₃ and MgO. A preferred mixed oxide of Al₂O₃ and MgO has spinel structure or hydrotalcite structure.

According to this invention both - homogeneous and/or heterogeneous catalysts - may be used. However, those embodiments of the process according to the invention in which the catalyst is a heterogeneous catalyst are preferred. It has been found to be advantageous if the catalyst is preferably introduced into the reactor in the form of solid particles (in particular in the form of a granular mixture). The heterogeneous catalyst used particularly preferably has a mean particle size of its solid-shaped particles, in particular of its loose, solid-shaped particles of the granular mixture, a mean diameter X_{50,3} (volume average) of from 0.01 mm to 5 cm, preferably from 0.1 mm to 5 cm. The mean particle size diameter X_{50,3} is determined by sieving or by means of a particle size analyser Camsizer of the company Retsch.

When a heterogeneous catalyst is used, it has been found particularly suitable in the context of a further preferred embodiment if the catalyst particles have a smaller particle size as the particles of said scrap composite material. Therefore, it is preferred if in the pyrolysis material the average particle size of the catalyst therein is smaller than the average particle size of said scrap composite material therein.

The catalyst can be mixed with a filler material or simply added to filler material. Since catalyst used in the process of the invention tends to receive deposits of coke and other carbon residues, when catalyst is used, it is preferred to use a reactor which is simple and preferably allows the catalyst to be discharged and continuously regenerated. Therefore, the use of a continuous stirred tank reactor (CSTR), moving bed, screw reactor, screw conveyor reactor, entrained flow reactor, rotary cone reactor or fluidized bed reactor is preferred over the use of a fixed bed reactor.

The feedstock introduced into the reactor in step (a) is at least partially decomposed according to step (b) to form pyrolysate and pyrolysis residue.

It is a preferred embodiment of the method according to the invention, when the reinforcement material and the catalyst are recovered from the pyrolysis residue according to step (d).

Catalyst, also deactivated catalyst (e.g. by coking), which remains in the pyrolysis residue can be separated easily from the larger glass fibers and can be fed into a regenerator after the pyrolysis residue has been discharged from the reactor and, after regeneration, added either to the feedstock of step (b) to be fed into the pyrolysis reactor or added separately into the reactor. Reactors which allow a short contact time, intensive mixing of the feedstock components and for continuous recycling of the regenerated catalyst in the pyrolysis zone are most preferred. Since this is the case with a screw reactor, rotary kiln or fluidized bed, these reactors are particularly preferred.

Since both, catalyst and recovered reinforcement material (i.e. from the fiber-reinforced polyurethane-poly(meth)acrylate composite scrap material) remain in the pyrolysis residue, the recovery and isolation of both components is a preferred embodiment of the inventive method. The recovery and isolation can be done for example by sieving, whereas the reinforcement material will remain as the sieving residue on the sieve and the catalyst as the smaller component will be separated as sievings and is ready to be introduced into the aforementioned regeneration.

The decomposition according to step (b) of the inventive method is performed within a certain temperature range in the presence of a reduced amount of oxygen gas or even no oxygen gas.

After being introduced into the reactor, the feedstock is heated to a temperature in the range from 350°C to 700°C. A particularly successful improvement in the result of the process according to the invention can be achieved if, as one embodiment of the method, the feedstock introduced is tempered to 350°C to 700°C and, after this target temperature has been reached, the residence time of the correspondingly tempered feedstock up to the time of discharge of its resulting pyrolysis residue is 1 second to 2 hours, preferably between 2 minutes and 60 minutes, and the temperature and the content of oxygen gas in the reactor during this period being the values defined in step (b).

Independently of this, good results can be achieved if the discharge of the pyrolysate from the reactor taking place in step (b) is ensured by a gas flow guided through the reactor or by suction, and further preferably thereby a residence time of the pyrolysate as a time period between the time of introduction of the said feedstock introduced into the reactor in step (a) and the time of discharge of the pyrolysate is 0.1 seconds to 10 seconds, preferably between 0.5 seconds and 5 seconds, particularly preferably 0.5 seconds to 2 seconds.

If a gas stream is passed through the reactor for this purpose, the gas suitable for this gas stream is in particular an inert gas, preferably selected from nitrogen, argon, CO₂, NO or a mixture thereof.

If a gas stream is used for discharging the pyrolysate, it is preferred according to a preferred embodiment of the method, if the flow velocity of the gas stream in the reactor as a superficial velocity is in the range of 0.01 m/s to 20 m/s. Should a fixed bed reactor be chosen as the reactor, it is preferred according to the invention if the flow velocity of the gas stream in the reactor as the superficial velocity is in the range of 0.03 m/s to 1 m/s. Should a fluidized bed reactor be chosen as the reactor, it is preferred according to the invention that the flow velocity of the gas stream in the reactor as the superficial velocity is in the range of 0.5 m/s to 2 m/s. If an entrained flow reactor is selected as the reactor, it is preferred according to the invention that the flow velocity of the gas stream in the reactor as the superficial velocity is in the range of 5 m/s to 20 m/s.

As conditions according to the invention for the decomposition in the pyrolysis in step (b), the temperature in the reactor is from 350 to 700 °C and the amount of oxygen gas in the reactor is from 0 to 2.0% by volume based on the total volume of gases in the reactor.

For adjusting the amount of oxygen gas according to the invention, the reactor filled with feedstock is filled with inert gas, in particular with nitrogen, argon, CO₂, NO or a mixture thereof. In addition to oxygen gas, various reactive gases may be added to the inert gas, in particular selected from methane, gaseous H₂O, hydrogen gas or mixtures thereof.

In order to minimize the introduction of oxygen gas by introducing the feedstock into the reactor, the feedstock can be freed of oxygen gas before it is introduced in step (a), for example by driving out the oxygen gas by means of stripping with a stripping gas, for example in a receiver tank upstream of the reactor. For example, inert gas, in particular nitrogen, argon, CO₂, NO, mixtures thereof, could be fed as stripping gas from above or from below in the receiver tank (preferably from above) via a frit into the vessel to the feedstock in order to drive out the oxygen gas.

In a preferred embodiment of the process according to the invention, the temperature in step (b) is from 350°C to 650°C, preferably between 400°C and 580°C, more preferably from 450°C to 550°C.

In the context of a further preferred embodiment of the process according to the invention, in step (b) the amount of oxygen gas in the reactor is at most 0.5% by volume, preferably at most 0.1% by volume, in each case based on the total volume of gases present in the reactor.

In a very preferred embodiment of the process according to the invention, in step (b), firstly, the temperature is from 350°C to 650°C, preferably between 400°C and 580°C, more preferably from 450°C to 550°C, and secondly, the amount of oxygen gas in the reactor is at most 0.5% by volume, preferably at most 0.1% by volume, in each case based on the total volume of gases present in the reactor.

According to a preferred embodiment of the method, the total pressure according to step (b) is at most 1,2 bar.

According to another preferred embodiment of the method, the total pressure according to step (b) is at least 0,8 bar.

A preferred embodiment of the method is a continuous process. For this, at least steps (a) and (b) run simultaneously.

The pyrolysis product obtained according to step (c) can be worked up by standard separation methods to obtain at least one organic amine compound.

According to a preferred embodiment of the invention, at least one recovered organic amine compound comprise at least two amino groups and is selected from formula (II) 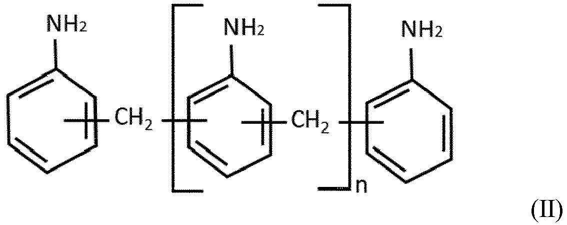 wherein n is a number from 0 to 8, preferably from 0 to 4, particularly preferred from 0 to 2.

It is particularly preferred, if the pyrolysis product comprises (i) at least one aromatic, organic compound with at least two amino groups and/or (ii) at least one aromatic, organic compound with one amino group.

According to a preferred embodiment of the invention, the recovered organic amine compounds comprise at least one aromatic, organic compound comprising one amino group, which is selected from aniline, toluidine or mixtures thereof.

Another aspect of the invention is a mixture of fiber-reinforced polyurethane-poly(meth)acrylate composite scrap material and catalyst, which is used during pyrolysis in the reactor. Therefore, this aspect is defined by a composition, comprising a mixture of at least one fiber-reinforced polyurethane-poly(meth)acrylate composite scrap material and at least one catalyst capable of influencing the thermal decomposition of said scrap material,
wherein said fiber- reinforced polyurethane-poly(meth)acrylate composite of said scrap material was obtained from at least one reinforcement material and at least one polyurethane-poly(meth)acrylate reactive composition, wherein the polyurethane-poly(meth)acrylate reactive composition was comprising:
   A) an isocyanate component comprising one or more organic polyisocyanates;
   B) an isocyanate-reactive component comprising:
      B1) one or more (meth)acrylate monomers containing at least one hydroxyl - functionality;
      B2) one or more organic polyols;
   C) a radical reaction initiator, and
wherein the polyurethane-poly(meth)acrylate resin was obtained by reacting the components, preferably by a one-pot process.

Said composition is preferably to be used as component of the feedstock according to the method of the invention. Therefore another aspect of the invention is the use of said composition in pyrolysis of scrap, fiber-reinforced polyurethane-poly(meth)acrylate composite material, preferably by above described method according to the invention.

All preferred embodiments of the fiber-reinforced polyurethane-poly(meth)acrylate composite scrap material and the catalyst as defined in above described method of the invention, also serve as preferred embodiments for the composition and the use thereof.

### Examples

To prepare the experiments with wind blade composite, the reactor was first filled. The pellets used as scrap composite material according to this invention comprise ca. 73 wt.% glass fibers and 27 wt.-% resin. The resin was prepared from 100 parts by weight of isocyanate reactive material (B) comprising related to the weight of component (B) 55 wt.-% polyol (B2) and 45 % by weight hydroxypropyl methacrylate (HPMA) (B1)) and 88 parts by weight of isocyanate (A). The radical initiator used was t-butylperoxybenzoate. A mixture of catalyst (Pluralox^{®} SBA 200 from Sasol) and composite pellets was prepared and the resulting feedstock was filled from below into the reactor. After the reactor had been filled, the end pipe was isolated. The cooling traps were then prepared and connected to the reactor. The thermocouples of the reactor and of the cold traps were connected.

The temperature was set to 490°C.

This was followed by the heating-up phase of 20 minutes. The duration of the experiment was 30 minutes. The reactor was then flushed with nitrogen gas for a further period of 10 minutes.

After the experiment, the liquid nitrogen was removed from under the cold traps.

After thawing of the cold traps, the pyrolysis oil was flushed out of the cold trap with 25 ml of methanol. The pyrolysis oil in methanol was filled into a prepared sample glass with cumene, the internal standard for the gas chromatography. After cooling of the reactor, the end pipe and the perforated plate insert were likewise flushed with 25 ml of methanol into a separate glass with cumene the internal standard.

A GC analysis was carried out of the cold trap sample and the reactor sample. 100 µL of cumene are used per sample solution of 25 ml and the pyrolysis oil.

The GC system Agilent Technologies 7890 A was used for the analysis. The GC column, Rxi-1ms, from Restek was used to separate the substances within the system. The length of the used column is 30 m, the inner diameter is 0.32 mm. The temperature range of the column is -60 °C up to 330/350 °C.

The evaluation of the GC data takes place via the software Chromeleon^{®} (from Thermo Fisher Scientific).

### Results:

The composition as detected according to above described analysis is summarized in table 1 below.

**Table 1: Composition of the pyrolysis product and the pyrolysis residue from fiber-reinforced composite material scrap pellets determined at 273°C [wt.-%]:**

| | **wt.-%** |
|---|---|
| **pyrolysis results** | related to total weight of scrap composite material |
| **pyrolysis product (oil):** | |
| aniline | 1,56 |
| toluidine | 0,58 |
| methylenedianiline (MDA) | 0,02 |
| Acetone | 0,17 |
| 1,4-dioxane | 0,02 |

| remainders (not further characterized) | 4,71 |
|---|---|
| **Pyrolysis residue** | |
| glass | 73,00 |
| coke | 5,00 |

The remaining amount of components produced upon pyrolysis is assumed to be gaseous at ambient temperature and was therefore not detected by the procedure as described above or to be liquid but could not be detected due to the large set up in comparison to the obtained oil part.

## Claims

1. Method for pyrolysis of scrap, fiber-reinforced polyurethane-poly(meth)acrylate composite material, comprising at least the following steps
(a) introduction of a feedstock, comprising at least one fiber reinforced polyurethane-poly(meth)acrylate composite scrap material,
wherein said fiber-reinforced polyurethane-poly(meth)acrylate composite of said scrap material was obtained from at least one reinforcement material and at least one polyurethane-poly(meth)acrylate reactive composition, wherein the polyurethane-poly(meth)acrylate reactive composition was comprising:
A) an isocyanate component comprising one or more organic polyisocyanates;
B) an isocyanate-reactive component comprising:
B1) one or more (meth)acrylate monomers containing at least one hydroxyl - functionality;
B2) one or more organic polyols;
C) a radical reaction initiator, and
wherein the polyurethane-poly(meth)acrylate resin was obtained by reacting the components, preferably in a one-pot process,
into a reactor, and;
(b) decomposition of the polyurethane-poly(meth)acrylate resin of the introduced fiber reinforced polyurethane-poly(meth)acrylate composite scrap material at a temperature in the range of 350°C to 700°C in the presence of one catalyst capable of influencing the thermal decomposition of said scrap material, yielding at least pyrolysate in the gas phase and a pyrolysis residue, comprising at least separated reinforcement material as a solid, wherein
(i) during said decomposition the amount of oxygen gas inside the reactor is at most 2,0 % by volume of the total volume of the gas phase inside the reactor, and
(ii) during said decomposition the pyrolysate is removed from the reactor, and
(iii) said pyrolysis residue is removed from the reactor, and;
(c) cooling the removed pyrolysate down to a temperature of below 350°C to yield pyrolysis product, selected from pyrolysate condensate, desublimated pyrolysate or mixtures thereof, and;
(d) preferably recovery of reinforcement material and catalyst from pyrolysis residue.

2. Method according to claim 1, **characterized in, that** the reinforcement material of the fiber-reinforced polyurethane-poly(meth)acrylate composite scrap material is selected from glass fibers, carbon nanotubes, carbon fibers, polyester fibers, natural fibers, aramid fibers, nylon fibers, basalt fibers, boron fibers, silicon carbide fibers, asbestos fibers, whiskers, hard particles, metal fibers or combinations thereof.

3. Method according to any of the preceding claims, **characterized in, that** the fiber reinforced polyurethane-poly(meth)acrylate composite scrap material comprises said reinforcement material in an amount of 30-85 wt.-%, preferably of 50-80 wt.-%, based on the total weight of the fiber reinforced polyurethane-poly(meth)acrylate composite scrap material.

4. Method according to any of the preceding claims, **characterized in, that** the decomposition is performed at a temperature in the range of 350°C to 650°C, preferably in the range of 400°C to 580°C, most preferably in the range of 450°C to 550°C.

5. Method according to any of the preceding claims, **characterized in, that** during decomposition of step (b) the amount of oxygen gas inside the reactor is at most 0,5 % by volume of the total volume of the gas phase inside the reactor, preferably at most 0,1 % by volume.

6. Method according to any of the preceding claims, **characterized in, that** during step (b) inert gas, preferably nitrogen, argon, CO₂, NO or mixtures thereof, is passed through the reactor.

7. Method according to any of the preceding claims, **characterized in, that** said component A) is at least one compound selected from the group consisting of aliphatic diisocyanates, aliphatic polyisocyanates, cycloaliphatic diisocyanates, cycloaliphatic polyisocyanates, aromatic diisocyanates, aromatic polyisocyanates.

8. Method according to any of the preceding claims, **characterized in, that** said component A) comprises at least one compound selected from the group consisting of 1,4-butylene diisocyanate, 1,5-pentane diisocyanate, 1,6-hexamethylene diisocyanate (HDI), isophorone diisocyanate (IPDI), 2,2,4- trimethylhexamethylene diisocyanate 2,4,4-trimethylhexamethylene diisocyanate, bis(4,4'-isocyanatocyclohexyl)methane, 1,4-cyclohexylene diisocyanate, 1,4-phenylene diisocyanate, 2,4-toluene diisocyanate, 2,6-toluene diisocyanate (TDI), 1,5-naphthalene diisocyanate, 2,2'-diphenylmethane diisocyanate, 2,4'-diphenylmethane diisocyanate, 4,4'-diphenylmethane diisocyanate (monomeric MDI, mMDI), polyphenylenepolymethylene polyisocyanate (pMDI), 1,3- bis-(2-isocyanato-prop-2-yl)-benzene, 1,4-bis-(2-isocyanato-prop-2-yl)-benzene (TMXDI), 1,3-bis-(isocyanatomethyl)benzene (XDI).

9. Method according to any of the preceding claims, **characterized in, that** said component B1) comprises at least one hydroxyl (meth)acrylate monomer with a hydroxyl number between 150 - 700 mg KOH/g, more preferably between 220-600 mg KOH/g, most preferably between 300-500 mg KOH/g.

10. Method according to any of the preceding claims, **characterized in, that** said component B1) comprises at least one compound selected from the group consisting of hydroxyethyl (meth)acrylate, hydroxypropyl (meth)acrylate and hydroxybutyl (meth)acrylate.

11. Method according to any of the preceding claims, **characterized in, that** said component B2) comprises at least one compound selected from the group consisting of polyether polyols, polyester polyols, polyetherester polyols, polymer polyols and polycarbonate polyols, polyethercarbonate polyols, preferably at least one compound selected from the group consisting of polyhydroxypolyethers.

12. Method according to any of the preceding claims, **characterized in, that** said component C) comprises at least one compound selected from the group consisting of peroxides, peroxyesters, ketone peroxides, diacyl peroxides, peroxyketals, peroxycarbonates, persulfides, peroxyboric acid, azo compounds.

13. Method according to any of the preceding claims, **characterized in, that** said catalyst is at least one compound selected from inorganic salt, mineral, metal oxide, mixed oxide, clay, zeolite or mixtures thereof.

14. Method according to any of the preceding claims, **characterized in, that** said catalyst is selected from at least one mixed oxide of Al₂O₃ und MgO.

15. Method according to any of the preceding claims, **characterized in, that** at least during the decomposition according to step (b) water vapor is introduced into the reactor.

16. Method according to any of the preceding claims, **characterized in, that** said reinforcement material was recovered from the pyrolysis residue by sieving.

17. Method according to any of the preceding claims, **characterized in, that** said catalyst was recovered from the pyrolysis residue by sieving.

18. Composition, comprising a mixture of at least one fiber- reinforced polyurethane-poly(meth)acrylate composite scrap material and at least one catalyst capable of influencing the thermal decomposition of said scrap material,
wherein said fiber reinforced polyurethane-poly(meth)acrylate composite of said scrap material was obtained by a one-pot process from at least one reinforcement material and at least one polyurethane-poly(meth)acrylate reactive composition, wherein the polyurethane-poly(meth)acrylate reactive composition was comprising:
A) an isocyanate component comprising one or more organic polyisocyanates;
B) an isocyanate-reactive component comprising:
B1) one or more (meth)acrylate monomers containing at least one hydroxyl - functionality;
B2) one or more organic polyols;
C) a radical reaction initiator, and
wherein the polyurethane-poly(meth)acrylate resin was obtained by reacting the components,

19. Use of a composition according to claim 18 in pyrolysis of scrap, fiber-reinforced polyurethane-poly(meth)acrylate composite material, preferably by a method according to any of the claims 1 to 17.
